# EUROPÄISCHE PATENTSCHRIFT

(11) **EP 0 953 796 B1**
(45) Veröffentlichungstag und Bekanntmachung des Hinweises auf die Patenterteilung: **02.07.2003**
(21) Anmeldenummer: 99108343.7
(22) Anmeldetag: 28.04.1999
(51) Int. Cl.: F16L 11/12, C08K 3/04, B32B 27/20, C08L 67/00, C08L 77/00

(54) **Antistatische und peroxidstabile Formmassen**
Antistatic and peroxide-resistant moulding compositions
Matières moulables antistatiques et résistantes au péroxide

(30) Priorität: 30.04.1998 DE 19819565
(43) Veröffentlichungstag der Anmeldung: 03.11.1999
(73) Patentinhaber: EMS-Chemie AG, 7013 Domat/Ems (CH)
(72) Erfinder: Stöppelmann, Georg, 7402 Bonaduz (CH); Hewel, Manfred, 7415 Rodels (CH)
(74) Vertreter: Becker Kurig Straus

(56) Entgegenhaltungen:
- EP-A- 0 470 606
- EP-A- 0 781 799
- WO-A-94/14900
- DE-A- 4 111 529
- DATABASE WPI Section Ch, Week 9820 Derwent Publications Ltd., London, GB; Class A23, AN 98-225228 XP002110428 & JP 10 067881 A (TORAY IND INC), 10. März 1998 (1998-03-10)

## Beschreibung

Die Erfindung betrifft antistatische und gleichzeitig gegen Peroxide stabilisierte Formmasen auf Basis von Polyamiden und/oder Polyestern. Diese antistatisch ausgerüsteten Formmassen können zur Herstellung von spritzgegossenen oder extrudierten Teilen, zur Herstellung von Folien oder Mehrschichtschlauch- oder Rohrleitungen verwendet werden.

Seit langer Zeit ist die antistatische Ausrüstung von Polymeren mit leitfähigen Zusätzen wie Ruß, Kohlenstoff-Fasern und Metallpulvern bekannt (vgl. Gaechter, Müller in "Plastics Additives" S. 762, 1993). Bei Metallpulvern sind hohe Füllstoffmengen notwendig, wodurch die mechanischen Eigenschaften stark beeinflußt werden. Zudem sind diese Metallpulver meist sehr teuer. Die Zugabe von Kohlenstoff-Fasern führt zur Versteifung und zur Reduktion von Schlagzähigkeit und Reißdehnung, was besonders nachteilig ist, wenn Rohrleitungen antistatisch ausgerüstet werden sollen.

Bei Rußen, die einer Formmasse auf Basis von Kautschuk, Kunststoffen oder anderen Materialien zur antistatischen Ausrüstung zugegeben werden, spielt das Herstellungsverfahren des Rußes, das die physikalischen Eigenschaften eines Rußes, wie beispielsweise Struktur, Teilchengröße, Aschegehalt, Feuchtegehalt, Schwefelgehalt, Gritgehalt wesentlich beeinflusst, eine entscheidende Rolle in Bezug auf die Eigenschaflen des erhaltenen Produkts. (vgl. N. Probst und H. Smet, "Eine neue Familie von Leitrußen", GAK Gummi Fasern Kunststoffe 11/1996, Jahrgang 49, Seiten 900-905).

Es werden schon seit langer Zeit in Kraftfahrzeugen Kraftstoffleitungen aus Kunststoffen wie z.B. Polyamiden eingebaut. Durch die hohe Treibstoffzirkulation, wie sie z.B. bei Einspritzmotoren üblich ist, können sich diese Rohrleitungen stark aufladen. Diese statische Ladung kann im Extremfall zu einer explosionsartigen Zerstörung der Leitungen und Austreten von Kraftstoff aus den Leitungen führen. Dadurch ist ein erhöhtes Sicherheitsrisiko wegen akuter Brandgefahr gegeben. Es wurden deshalb Entwicklungen durchgeführt, Polymere mit geringer Leitfähigkeit herzustellen und besonders in Polyamid 11 oder Polyamid 12 elektrisch leitende Additive wie die oben erwähnten Ruß, Kohlefasern und Metallpulver einzumischen.

In der DE-A-40 25 301 bzw. in der entsprechenden EP 0 470 606 A1 werden antistatische und peroxidstabile Kraftstoffleitungen beschrieben, bei denen Polyamide und Polyethylene in Mehrschicht-Rohren zum Einsatz kommen, die mit Leitruß mit einem Gehalt von 5 bis 40 Gew.-% antistatisch modifiziert sind, wobei als Leitruß handelsübliche Qualitäten zu verstehen sind. Die Wahl des Leitrußes ist allerdings für die Eigenschaften einer erhaltenen antistatisch modifizierten Formmasse entscheidend, wie vorstehend bereits erwähnt wurde. Zudem läßt sich diesem Dokument nicht entnehmen, wie das Problem der Peroxid-Beständigkeit effektiv gelöst werden soll.

Werden Polyamid- oder Polyester-Formmassen mit Leitfähigkeitsrußen gefüllt, zeigen diese zwar einen antistatischen Effekt, jedoch ist die thermische und chemische Beständigkeit reduziert. Insbesondere ist für Anwendungen im Automobilbau, bei denen Polyamide und Polyester in ständigem Kontakt mit Kraftstoff sind, die Beständigkeit gegen Peroxide von herausragender Bedeutung.

Eine weitere Möglichkeit zur antistatischen Ausrüstung von Polyamiden und Polyestern ist die Einarbeitung von Graphitfasern, die in den Anmeldungen **US 5171560** und **WO 94/23433** und in Plastics World (September 1996) beschrieben sind. Mit diesen Graphit-Fasern gelingt die antistatische Ausrüstung von Polyamiden und Polyestern ohne dass die Peroxid-Stabilität verloren geht. Allerdings sind diese Graphitfasern sehr teuer und die Einarbeitung in Polyamide und Polyester ist wegen den hohen Viskositäten der entstehenden Compounds schwierig.

Es ist daher Aufgabe der Erfindung, Formmassen auf Basis von Polyamiden und/oder Polyestern antistatisch auszurüsten, ohne daß die Beständigkeit gegen Peroxide verloren geht.

Diese Aufgabe wird durch die antistatischen, Peroxid-stabilen Formmassen auf Basis von Polyamiden und/oder Polyestern gelöst, die mit Leitruß, der nur in sehr geringer Menge metallische Verunreinigungen aufweist, mit einem Gehalt von 5 bis 25 Gew.-% bezogen auf die gesamten Formmassen, antistatisch modifiziert sind, wobei der Ruß eine niedrige spezifische Oberfläche und einen Schwefelgehalt von unter 0,1 Gew.-% besitzt.

Die Formmassen können zur Herstellung von spritzgegossenen oder extrudierten Teilen, zur Herstellung von Folien oder Mehrschichtschlauch- oder Rohrleitungen verwendet werden (Anspruch 6).

Die obige Aufgabe wird weiterhin durch thermoplastische Mehrschichtverbunde gemäß Anspruch 7 gelöst, wobei mindestens eine Schicht aus einer Formmasse auf Polyester- oder Polyamidbasis besteht, die mit hochreinem Leitruß mit niedriger spezifischer Oberfläche spezifiziert ist. Der Mehrschichtverbund enthält mindestens eine zweite zur vorgenannten Schicht wenigstens teilweise benachbarte Schicht auf Basis einer Polyamidformmasse und gegebenenfalls eine zwischen diesen Schichten liegende Haftvermittlerschicht, welche die Polyesteroder Polyamidschicht mit der vorgenannten Polyamid- oder Polyesterschicht kraftschlüssig verbindet.

In den übrigen Unteransprüchen sind vorteilhafte Ausführungsformen der Erfindung enthalten.

Überraschenderweise wurde festgestellt, daß, wenn in Polyamid- und/oder Polyester-Formmassen solche sehr reinen Leitfähigkeitsrusse eingearbeitet werden, die Formmassen Peroxidbeständig sind. Rein bedeutet in diesem Fall, dass der Russ nur in sehr geringer Menge metallische Verunreinigungen, beispielsweise durch Kupfer oder Eisen, besitzt. Weiterhin ist wichtig, dass der Sauerstoff- und Schwefel-Gehalt dieser Russe möglichst gering ist.

In einer bevorzugten Ausführungsform der Erfindung besitzt die Formmasse auf Basis von Polyamid eine kontinuierliche Polyamid-Phase und die Formmasse auf Basis von Polyester eine kontinuierliche Polyester-Phase.

Bei den erfindungsgemäßen Polyamiden kommen in Frage:
Homo- oder Copolymere, die sich von Dicarbonsäuren, Diaminen, Aminocarbonsäuren und/oder Lactamen herleiten lassen. Hierbei sind Lactame mit 6 bis 12 C-Atomen, α ω-Aminocarbonsäuren mit 6-12 C-Atomen, Dicarbonsäuren mit 2-44 C-Atomen und aliphatischen und/oder cycloaliphatischen Diaminen mit 2-12 C-Atomen bevorzugt. Erfindungsgemäß sind die Polyamide ausgewählt aus Homound/oder Copolyamiden auf Basis von PA 6, PA 46, PA 66, PA 612, PA 1010, PA 1012, PA 69, PA 11, PA 12, PA 1212, PA 6T, PA 61, PA 12T, PA 121, PA 12/6T, PA 12/6l und/oder deren Gemische bevorzugt, wobei PA 12 besonders bevorzugt ist.

Die Kennzeichnung der Polyamide entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren Lactam ausgegangen wird. Das Zahlenmittel des Molekulargewichts der Polyamide sollte über 5.000, vorzugsweise über 10.000 liegen.

Sofern Copolymere verwendet werden, können diese z.B. Adipinsäure, Sebacinsäure, Korksäure, Isophthalsäure, Terephthalsäure, Dodecandisäure als Co-Säure bzw. 4'-Amino(cylcohexyl)methan, Trimethylhexamethylendiamin, Hexamethylendiamin oder ähnliche als Co-Diamine enthalten.

Die Herstellung dieser Copolyamide ist z.B. aus DE-AS 21 52 194 bekannt.

Ebenfalls geeignet als Polyamide sind gemischte aliphatische/aromatische Polykondensate, wie sie z.B. in den US-PSS 2,071,250, 2,071,251 et al. beschrieben sind. Als Polyamide geeignete Polykondensate sind ebenfalls Polyetheresteramide bzw. Polyetheramide geeignet. Derartige Produkte werden z.B. in DE-OS 27 12 987 beschrieben. Weiterhin kommen Polyesteramide, die aus DE-A 19 64 313 bekannt sind im Rahmen der Erfindung in Betracht.

Sofern es erforderlich ist, können die Polyamide schlagzäh eingestellt werden. Geeignete Schlagzähmodifikatoren sind z.B. Ethylen/Propylen- oder Ethylen/Propylen/Dien-Copolymere oder auch andere schlagzäh machende Kautschuke.

Daneben können auch ein Flammschutz sowie weitere Zusatzstoffe wie Pigmente, Oligo- und Polymere, Stabilisatoren und Verarbeitungshilfsmittel sowie Verstärkungsmittel enthalten sein. Der Anteil der Verstärkungsmittel kann bis zu 50%, der der Flammschutzmittel bis zu 15% und der aller übrigen Zusatzstoffe insgesamt bis zu 5%, jeweils bezogen auf die gesamte Formmasse, betragen.

Besonders bevorzugt für Anwendungen im Kraftstoffleitungsbereich bzw. im Kfz-Bereich sind Polyamid 12 und semi-aromatische Polyamide.

Unter Polyestern sind solche Polymere zu verstehen, bei denen die Monomereinheiten überwiegend, d.h. durch Esterbindungen miteinander verknüpft sind. Hier kommen Homo- und Copolymere in Frage, die sich von Dicarbonsäuren, Diolen, Bisphenolen, Hydroxycarbonsäuren und/oder Lactonen herleiten. Als DiolKomponente kommen hier beispielsweise Ethylenglykol, Propylenglykol, Trimethylenglykol, Tetramethylenglykol, Hexamethylenglykol, 1,4-Cyclohexandimethanol und Neopentylglykol und als Dicarbonsäurekomponente beispielsweise Isophthalsäure, Terephthalsäure, 2,6-, 2,7-, 1,5-, 1,4-Naphthalindicarbonsäure, Diphensäure und Diphenylether-4,4'-dicarbonsäure in Frage. Ein Teil dieser Diolkomponente kann in bekannter Weise durch eine Verbindung mit der Formel 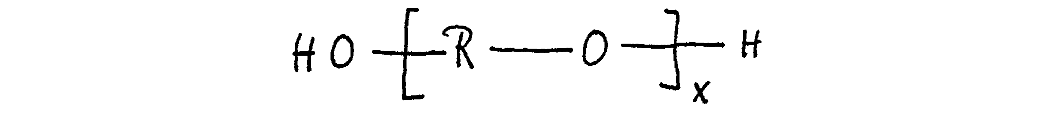 mit x mindestens gleich 10 ersetzt werden, wobei R eine zweiwertige gesättigte Gruppe mit 2 bis 4 C-Atomen bedeutet. Genauso können maximal 20 Mol-% der Dicarbonsäurekomponente durch aliphatische Dicarbonsäuren mit 2 bis 12 C-Atomen, wie z.B. Bernsteinsäure, Malein- oder Fumarsäure, Adipinsäure, Sebacinsäure und Dodecandisäure ersetzt sein. Geeignete Bisphenole sind beispielsweise Bisphenol A, Bisphenol T, Hydrochinon, Tetramethylbisphenol A oder Tetramethylbisphenol S, geeignete Hydroxycarbonsäuren, beispielsweise p-Hydroxybenzoesäure. während als Lacton insbesondere Caprolacton geeignet ist. Die Darstellung dieser Polyester erfolgt üblicherweise durch Kondensation eines Diols, z.B. Ethylenglykol, 1,4-Butandiol oder 1,4-Cyclohexandimethanol mit einer aromatischen Dicarbonsäure, wie z.B. Isophthal- oder Terephthalsäure oder deren Ester. Bevorzugt werden als Polyester Polyethylenterephthalat (PET) oder Polybutylenterephthalat (PBT) oder Copolyester aus 1,4-Butandiol, Dodecandisäure und Terephthalsäure verwendet.

Verfahren zur Herstellung dieser Polyester sind in der Literatur ausführlich beschrieben (z.B. Ullmanns Enzyklopädie der technischen Chemie, Band 19, S. 61 ff., sowie DE-OS 24 07 155 und DE-OS 24 07 156).

Bei den erfindungsgemäß eingesetzten Polyestern sind insbesondere Polybutylenterephthalat, Polyethylennaphthalat und Polybutylennaphthalat bevorzugt.

Die erfindungsgemäßen antistatischen Formmassen können zur Herstellung von spritzgegossenen oder extrudierten Teilen, zur Herstellung von Folien oder Mehrschichtschlauch- oder Rohrleitungen verwendet werden. Die Erfindung betrifft daher auch thermoplastische Mehrschichtverbunde, die mindestens eine Schicht aus einer Formmasse auf Polyester- oder Polyamidbasis und mindestens eine zweite zur vorgenannten Schicht wenigstens teilweise benachbarte Schicht aus Polyamid beinhalten. Die Polyester- oder Polyamidschichten können mit hochreinem Ruß mit niedriger spezifischer Oberfläche antistatisch ausgerüstet sein. Gegebenenfalls kann zwischen den Polyester- oder Polyamidschichten eine Haftvermittlerschicht vorgesehen sein, welche die Polyamid- oder Polyesterschicht mit der weiteren Polyamidschicht kraftschlüssig verbindet.

In einer bevorzugten Ausführungsform der Erfindung besteht der thermoplastische Mehrschichtverbund aus einer inneren und äußeren Schicht aus Polyamid und einer zur inneren Schicht benachbarten Barriereschicht aus Polybutylenterephthalat und gegebenenfalls einer Haftvermittlerschicht zwischen Polybutylenterephthalat und Polyamid.

In einer anderen Ausführungsform der Erfindung besteht der Mehrschichtverbund aus einer Innenschicht aus Polybutylenterephthalat und einer Polyamidaußenschicht, wobei gegebenenfalls eine Haftvermittlerschicht zwischen PBT- und PA-Schicht vorgesehen sein kann.

Die Fertigung der Mehrschichtverbunde kann ein- oder mehrstufig erfolgen. Beim einstufigen Spritzgießverfahren bringt man die verschiedenen Schmelzen in einer Form zusammen und läßt das Formteil erkalten. Beim einstufigen Extrusionsverfahren werden in üblicher Weise die verschiedenen Schmelzen koextrudiert. Bei den mehrstufigen Verfahren wird zunächst ein Formteil entweder aus der Komponente a) oder der Komponente b) hergestellt und dann mit den übrigen Komponenten beaufschlagt, was durch Pressen, Sprtzgießen oder Extrudieren geschehen kann.

Die erfindungsgemäßen Mehrschichtverbunde finden bei Konstruktionsteilen vor allem im Bereich der Elektro-, Maschinenbau- und Automobil-lndustrie dort Verwendung, wo die hervorragende Peroxid-Beständigkeit der Polyamide bzw. der Polyester mit guten thermischen und chemischen Eigenschaften kombiniert sein soll.

Der erfindungsgemäße Mehrschichtverbund kann auch die Form einer Schlauchoder Rohrleitung aufweisen. In diesem Fall ist die Innenschicht antistatisch ausgerüstet, d.h. die Schicht aus einer Formmasse auf Basis von Polyester oder Polyamid enthält hochreinen Leitruß mit niedriger spezifischer Oberfläche. Bei diesem Leitruß ist, wie bereits oben ausgeführt wurde, der Sauerstoff- und Schwefelgehalt äusserst gering. Die Charakterisierung des erfindungsgemäßen Russes erfolgt in der unten stehenden Tabelle 2.

Die Schichtdicke der erfindungsgemäßen Schlauch- oder Rohrleitung ist unkritisch. Bevorzugt sind Schutzschichtdicken von 0,2 bis 0,6 mm, Barriereschichten von 0,2 bis 0,7 mm und Haftvermittlerschichten von 0,05 bis 0,3 mm.

In einer bevorzugten Ausführungsform besteht ein Dreischichtrohr aus folgenden Schichten.
Innen: Polybutylenterephthalat mit Leitruß antistatisch ausgerüstet: 0,45 bis 1 mm, Barriereschicht: aus einem Haftvermittler auf Basis von teilkristallinen, hochmolekularen Block-(Co)polyesteramiden,
Außen: Polyamid 12, 0,45 mm.

Die Mehrschicht-Polymerrohrleitung kann auch in einem Teilbereich gewellt sein.

In einer weiteren bevorzugten Ausführungsform kann die erfindungsgemäße Schlauch- oder Rohrleitung aus vier oder mehr Schichten bestehen:
Innenschicht: Polybutylenterephthalat oder Polyamid 6 oder Polyamid 12,
Schichtdicke: 0,1mm;
gegebenenfalls Haftvermittlerschicht aus Polyesteramid, z.B. Grilamid EA2 HV1, falls die Innenschicht aus Polyamid 12 besteht, Schichtdicke: 0,05-0,3 mm;
Mittelschicht: Polybutylenterephthalat, Schichtdicke: 0,2 bis 0,4 mm;
Haftvermittlerschicht: auf Basis von teilkristallinen, hochmolekularen Block-(Co)polyesteramiden;
Außenschicht: Polyamid 12 oder Polyamid 11, Schichtdicke: 0,4 bis 0,5 mm.

Die oben erwähnte Haftvermittlerschicht besteht aus einer Formmasse auf Basis von teilkristallinen, hochmolekularen Block-(Co)polyesteramiden, wobei die Block-(Co)polyesteramide zwei kristalline Phasen ausbilden und als Segmente (a) mindestens einen Polyamid- oder Copolyamidblock auf Basis lactamhaltiger Polyamide mit einheitlichen Zahlen mittleren Molmassen von mindestens 1000 g/Mol und (b) mindestens einen aromatischen Polyester- und/oder Copolyesterblock mit einer einheitlichen Zahl in mittlerer Molmasse von mindestens 1000 g/Mol, die aus Monomeren ausgebaut sind, ausgewählt aus der Gruppe aromatischer Dicarbonsäuren, Dicarbonsäurester und (c) mindestens einer Diolkomponente, d.h. Polyethylenglykol, Polypropylenglykol, Polytetrahydrafuran.

Die vorgenannten Haft- bzw. Verträglichkeitsvermittler werden in DE-A-19 64 313.3 ausführlich beschrieben. Der Offenbarungsgehalt der vorgenannten Druckschrift wird auch hiermit zum Gegenstand dieser Anmeldung gemacht.

Die Erfindung wird nun anhand der Beispiele erläutert, ohne sie zu begrenzen.

Eingesetzte Materialien: Polyamid 12 und Polybutylenterephthalat: Handelsprodukte der Firma EMS-CHEMIE:

**Tabelle 1**

| | Schmelzpunkt (°C) | relative Viskosität (m-Kresol) | COOH-Endgruppen (µÄq/g) | NH₂-Endgruppen (µÄq/g) | MVI (cm³/10min) |
|---|---|---|---|---|---|
| PA12 | 178 | 1,9 (0,5%-ige Lösung) | 70 | 20 | 100 275°C, 5 kg |
| PBT | 220 | 2,40 (1%-ige Lösung) | 8 | 11 (OH-Endgruppen) | 90 275°C, 5 kg |

| | | | | | |
|---|---|---|---|---|---|
| PA 12 = Polyamid 12 | | | | | |
| PBT = Polybutylenterephthalat | | | | | |

PA 12 = Polyamid 12
PBT = Polybutylenterephthalat
SZ: Schlagzähmodifikator-Mischung aus Maleinsäureanhydrid gepfropften Ethylen-Propylen- und Ethylen-Butylen-Copolymeren (n-Tafmer MC-201 der Firma Mitsui)
BBSA: Butyl-benzol-sulfonsäureamid
Irganox 245 : Handelsprodukt der Firma Ciba Specialty Chemicals Triethylenglycol Bis(3-(3'-Tert-Butyl-4'-Hydroxy-5'-Methylphenyl)Propionat
Hostanox PAR24: Handelsprodukt
Tris(2,4-di-tert-butylphenyl)phosphit
Irganox B1171:Handelsprodukt der Firma Ciba Specialty Chemicals 1/1 Mischung aus Tris(2,4-di-tert-butylphenyl)phosphit und N,N'-hexamethylen bis (3,5-di-tert-butyl-4-hydroxy-hydrocinnamid)

### Russe:

Erfindungsgemäss: Handelsprodukt der Firma MMM/Belgien Ensaco 250 Nichterfindungsgemäss: Handelsprodukt der Firma Degussa: Printex XE2 Die Charakterisierung dieser beiden Russe ist der folgenden Tabelle zu entnehmen

**Tabelle 2**

| | Erfindungsgemäß | Printex XE2 (Stand der Technik) |
|---|---|---|
| Aschegehalt (%) | 0,01 | 0,3 |
| Schwefelgehalt (%) | 0,06 | 0,17 |
| pH-Wert | 9,6 | 9,5 |
| Flüchtige Bestandteile (%) | 0,15 | 0,16 |
| Eisen (ppm) | 5 | 170 |
| Vanadium (ppm) | nicht nachweisbar | 875 |
| Nickel (ppm) | 2 | 320 |

Die russgefüllten Polyamid- sowie Polyester-Formmassen wurden auf einem 30mm Doppelschneckenextruder ZSK 30 der Firma Werner&Pfleiderer bei Temperaturen zwischen 240 und 280°C hergestellt. Dabei wurden jeweils das Polymer sowie der Russ separat in den Einzugsbereich des Extruders dosiert. Weichmacher sowie Glasfasern wurden in die Schmelze dosiert.

Die Prüfung der erfindungsgemässen und nicht erfindungsgemässen Formmassen wurden gemäss folgenden Vorschriften durchgeführt:
- MVI:: (Melt volume index) bei 275°C/5 kg nach ISO 1133
- SZ:: Schlagzähigkeit nach ISO 179/1eU
- KSZ:: Kerbschlagzähigkeit nach ISO 179/1eA

Streckspannung, Reissdehnung und Zug-E-Modul wurden gemäss ISO527 ermittelt.

Die Peroxidbeständigkeit wurde an 1 mm-Schlagzugstäben geprüft. Dazu werden die Prüfkörper in einem Gemisch aus 42.5% Toluol, 42.5% Isooctan und 15% Methanol, das zusätzlich 180 mmol/l tert-butyl-hydroperoxid und 10 mg Cu²⁺/l enthält, bei 60°C 14 Tage gelagert. Verglichen wird die Reissdehnung der ungelagerten Prüfkörper und die Reissdehnung der Prüfkörper nach Ende der Lagerung. Angegeben in der Tabelle ist die prozentuale Änderung der Reissdehnung.

Oberflächenwiderstand: DIN 53482 an 100x100x3 mm Platten

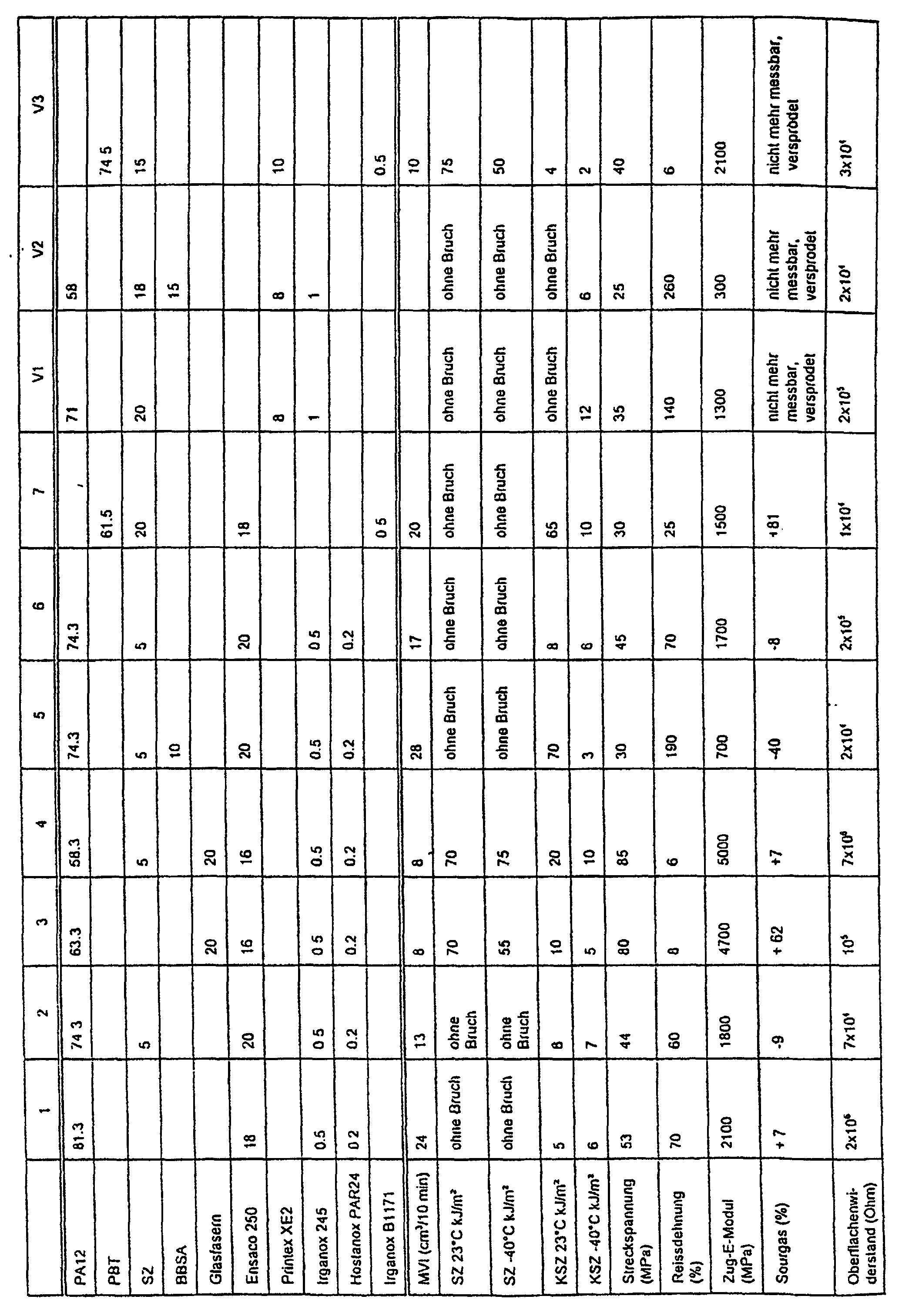

## Patentansprüche

1. Antistatische, peroxidstabile Formmassen auf Basis von Polyamiden und/oder Polyestern, wobei die Formmassen mit Leitruß, der nur in sehr geringen Mengen metallische Verunreinigungen aufweist, mit einem Gehalt von 5 bis 25 Gew.-%, bezogen auf die gesamten Formmassen, antistatisch modifiziert sind, **dadurch gekennzeichnet, dass** der Ruß eine niedrige spezifische Oberfläche und einen Schwefelgehalt von unter 0,1 Gew-% besitzt.

2. Formmassen gemäß Anspruch 1, **dadurch gekennzeichnet, dass** der Ruß einen Schwefelgehalt von 0,05 Gew.-% oder darunter aufweist.

3. Formmassen gemäß den Ansprüchen 1 und 2, **dadurch gekennzeichnet, dass** die Polyamide ausgewählt sind aus Homo- und/oder Copolyamiden auf der Basis von PA 6, PA 46, PA 66, PA 612, PA 1010, PA 1012, PA 69, PA 11, PA 12, PA 1212, PA 6T, PA 6I, PA 12T, PA 12I, PA 12/6T, PA 12/6I und/oder deren Gemischen, wobei PA 12 besonders bevorzugt ist und die (Co)polyamide mit verarbeitungs- oder verwendungsbedingten Additiven modifiziert sein können.

4. Formmassen gemäß den Ansprüchen 1 bis 3, **dadurch gekennzeichnet, dass** der Polyester ausgewählt ist aus der Gruppe Polyethylenterephthalat, Polybutylenterephthalat, Polyethylennaphthalat und/oder Polybutylennaphthalat.

5. Formmassen gemäß einem der vorhergehenden Ansprüche' 1 bis 4, **dadurch gekennzeichnet, dass** die Formmassen einen Gehalt an Ruß von 15 bis 25 Gew.-%, bezogen auf die gesamten Formmassen, aufweisen.

6. Verwendung der antistatischen Formmassen nach einem oder mehreren der vorhergehenden Ansprüche 1 bis 5, zur Herstellung von spritzgegossenen oder extrudierten Teilen, zur Herstellung von Folien oder Mehrschichtschlauch- oder Rohrleitungen.

7. Thermoplatischer Mehrschichtverbund, **gekennzeichnet durch**
(a) mindestens eine Schicht aus einer Fomamasse auf Polyester- oder Polyamid-Basis gemäß einem oder mehreren der vorhergehenden Ansprüche 1 bis 5,
(b) mindestens eine zweite zur Schicht gemäß (a), wenigstens teilweise benachbarte Schicht aus einer Formmasse auf Polyamid-Basis, und gegebenenfalls einer Haftvermittlerschicht, welche die Polyamid- oder Polyesterschicht gemäß (a) mit der Polyamidschicht gemäß (b) kraftschlüssig verbindet.

8. Thermoplastischer Mehrschichtverbund gemäß Anspruch 7, **dadurch gekennzeichnet, dass** er eine innere Schicht aus Polyamid oder aus Polybutylenterephthalat und eine äußere Schicht aus Polyamid, gegebenenfalls eine zur inneren Schicht benachbarte Barriereschicht aus Polybutylenterephthalat und mindestens eine Haftvermittlerschicht zwischen Polybutylenterephthalat-Schicht und Polyamid enthält, wobei die innere Polyamid- oder Polybutylenterephthalat-Schicht eine Schicht aus einer Formmasse auf Basis von Polyamid gemäß einem der Ansprüche 1 bis 5 ist.

9. Mehrschichtverbund gemäß einem oder mehreren der vorhergehenden Ansprüche 7 und 8, **dadurch gekennzeichnet, dass** er die Form einer Schlauch- oder Rohrleitung aufweist, wobei die Innenschicht antistatisch mit Ruß gemäß einem der Ansprüche 1, 2 und 5 modifiziert ist.

10. Verwendung des thermoplastischen Mehrschichtverbundes nach einem der Ansprüche 6 bis 9 zur Herstellung von Formteilen oder von Hohlprofilen.

## Claims

1. Antistatic, peroxide stable molding materials on basis of polyamides and/or polyesters, wherein said molding materials are modified antistatically with an amount of 5 to 25 % by weight, based on the total molding materials, of conductive carbon black having metallic impurities in a very low amount **characterized in that** said carbon black has a low specific surface area and a sulfur content of below 0.1 % by weight.

2. Molding materials according to claim 1, **characterized in that** said carbon black has a sulfur content below than 0.05 % by weight or less.

3. Molding materials according to claim 1 or 2, **characterized in that** said polyamides are selected from homopolyamides and/or copolymides on the basis of PA 6, PA 46, PA 66, PA 612, PA 1010, PA 1012, PA 69, PA 11, PA 12, PA 1212, PA 6T, PA 6I, PA 12T, PA 12I, PA 12/6T, PA 12/6I and/or mixtures thereof, wherein PA 12 is especially preferred and said (co)polyamides can be modified by processing- or use-specific additives.

4. Molding materials according to claim 1 to 3, **characterized in that** said polyester is selected from the group of polyethylene terephthalate, polybutylene terephthate, polyethylene napthtalate and/or polybutylene naphthalate.

5. Molding materials according one ore more of the preceding claims 1 to 4, **characterized in that** said molding materials have a content of carbon black of 15 to 25 wt.-%, based on said total molding materials.

6. Use of said antistatic molding materials according to one or more of the preceding claims 1 to 5 for production of injection molded or extruded parts and production of films or multilayered hoses or tubes.

7. Thermoplastic multi-layer composite, **characterized by**
(a) at least one layer of a molding material on polyester or polyamide basis according to one or more of the preceding claims 1 to 5,
(b) at least one second layer made of a molding material on polyamide basis which is at least partially adjacent to said layer according to (a), and if required, an adhesive layer that binds force-fittly said polyamide or polyester layer according to (a) to said polyamide layer according to (b).

8. Thermoplastic multi-layer composite according to claim 7, **characterized in that** it contains an inner layer made of polyamide or polybutylene terephthalate and an outer layer made of polyamide, and if required, a barrier layer made of polybutylene terephthalate adjacent to said inner layer and at least one adhesive layer between polybutylene terephthalate layer and polyamide, wherein said inner polyamide or polybutylene terephthalate layer is a layer of a molding material on basis of polyamide according to one of the claims 1 to 5.

9. Multi-layer composite according to one or more of the preceding claims 7 and 8, **characterized in that** it has the form of a hose or tube, wherein said inner layer is modified antistatically with carbon black according to one of claims 1, 2 and 5.

10. Use of the thermoplastic multi-layer composite according to one of the claims 6 to 9 for production of molded parts or hollow sections.

## Revendications

1. Matières moulables antistatiques à base de polyamides et/ou de polyesters, stables envers les peroxydes, les matières moulables étant modifiées de façon antistatique avec de la suie conductrice qui ne présente des impuretés métalliques qu'en de très faibles quantités, avec une teneur de 5 à 25% en poids par rapport aux matières moulables entières, **caractérisées en ce que** la suie possède une faible surface spécifique et une teneur en soufre inférieure à 0,1% en poids.

2. Matières moulables selon la revendication 1, **caractérisées en ce que**, la suie présente une teneur en soufre de 0,05% en poids ou moins.

3. Matières moulables selon les revendications 1 et 2, **caractérisées en ce que** les polyamides sont choisis parmi les homo- et/ou co-polyamides à base de PA 6, PA 46, PA 66, PA 612, PA 1010, PA 1012, PA 69, PA 11, PA 12, PA 1212, PA 6T, PA 6I, PA 12T, PA 12I, PA 12/6T, PA 12/6I et/ou leurs mélanges, PA 12 étant particulièrement préféré et les (co)polyamides peuvent être modifiés par des additifs conditionnés par le traitement ou l'utilisation.

4. Matières moulables selon les revendications 1 à 3, **caractérisées en ce que** le polyester est choisi dans le groupe formé par le poly(téréphtalate d'éthylène), le poly(téréphtalate de butylène), le poly(naphtalate d'éthylène) et/ou le poly(naphtalate de butylène).

5. Matières moulables selon l'une quelconque des revendications 1 à 4 précédentes, **caractérisées en ce que** les matières moulables présentent une teneur en suie de 15 à 25% en poids par rapport aux matières moulables entières.

6. Utilisation des matières moulables antistatiques selon l'une ou plusieurs des revendications 1 à 5 précédentes, pour fabriquer des pièces extrudées ou moulées par injection, pour fabriquer des feuilles ou des conduites à tube ou à tuyau multicouches.

7. Composite multicouches thermoplastique, **caractérisé par**
(a) au moins une couche constituée d'une matière moulable à base de polyester ou de polyamide selon l'une ou plusieurs des revendications précédentes 1 à 5,
(b) au moins une deuxième couche constituée d'une matière moulable à base de polyamide, au moins partiellement voisine de la couche selon (a), et éventuellement d'une couche d'agent adhésif, qui lie par adhérence la couche de polyamide ou de polyester selon (a) à la couche de polyamide selon (b).

8. Composite multicouches thermoplastique selon la revendication 7, **caractérisé en ce qu'**il contient une couche interne constituée de polyamide ou de poly(téréphtalate de butylène) et une couche externe constituée de polyamide, éventuellement une couche barrière constituée de poly(téréphtalate de butylène), voisine de la couche interne, et au moins une couche d'agent adhésif entre la couche de poly(téréphtalate de butylène) et le polyamide, la couche de polyamide ou de poly(téréphtalate de butylène) interne étant une couche d'une matière moulable à base d'un polyamide selon l'une quelconque des revendications 1 à 5.

9. Composite multicouches selon l'une ou plusieurs des revendications 7 et 8 précédentes, **caractérisé en ce qu'**il présente la forme d'une conduite à tuyau ou à tube, la couche interne étant modifiée de façon antistatique avec de la suie selon l'une quelconque des revendications 1, 2 et 5.

10. Utilisation du composite multicouches thermoplastique selon l'une quelconque des revendications 6 à 9, pour fabriquer des pièces moulées ou des profilés creux.
